# EUROPEAN PATENT SPECIFICATION

(11) **EP 4 170 766 B1**
(45) Date of publication and mention of the grant of the patent: **09.12.2026**
(21) Application number: 21894853.7
(22) Date of filing: 17.09.2021
(51) Int. Cl.: H01M 50/46, H01M 10/44, H01M 10/04, H01M 4/04, H01M 10/0585, H01M 50/105

(54) **SECONDARY BATTERY AND MANUFACTURING METHOD THEREOF**
SEKUNDÄRBATTERIE UND HERSTELLUNGSVERFAHREN DAFÜR
BATTERIE SECONDAIRE ET PROCÉDÉ DE FABRICATION DE CELLE-CI

(30) Priority: 18.11.2020 KR 20200155000; 16.09.2021 KR 20210124053
(43) Date of publication of application: 26.04.2023
(60) Divisional application: 26216907.1
(73) Proprietor: LG Energy Solution, Ltd., Seoul 07335 (KR)
(72) Inventor: CHOI, Seong Won, Daejeon 34122 (KR); KANG, Kyoung Won, Daejeon 34122 (KR); JUNG, Su Taek, Daejeon 34122 (KR); LEE, Yong Jun, Daejeon 34122 (KR); KWON, Soon Kwan, Daejeon 34122 (KR)
(74) Representative: Goddar, Heinz J.
(86) International application number: PCT/KR2021/012783
(87) International publication number: WO 2022/108080

(56) References cited:
- JP-A- 2017 050 215
- JP-A- 2017 050 215
- JP-A- 2018 520 491
- KR-A- 20170 101 582
- KR-A- 20180 025 805
- KR-A- 20180 028 411
- US-B1- 6 503 657

## Description

### TECHNICAL FIELD

This application claims the benefit of Korean Patent Application No. 10-2020-0155000 on November 18, 2020, and Korean Patent Application No. 10-2021-0124053 on September 16, 2021, with the Korean Intellectual Property Office.

The present invention relates to a secondary battery and a method for manufacturing the same, which is a method for preventing an electrode or a separator from being separated from a fixed position when manufacturing a unit cell by stacking the electrode and the separator, and more particularly, to a secondary battery and a method for manufacturing the same, which is capable of reducing production costs, reducing a defective rate in a process, which is caused by high-temperature heat and a high pressure, and preventing performance of the battery from being deteriorated, when compared to a method for manufacturing a radical unit cell through a lamination according to the related art.

### BACKGROUND ART

In general, secondary batteries include nickel-cadmium batteries, nickel-hydrogen batteries, lithium ion batteries, and lithium ion polymer batteries. Such a secondary battery is being applied to and used in small-sized products such as digital cameras, P-DVDs, MP3Ps, mobile phones, PDAs, portable game devices, power tools, E-bikes, and the like as well as large-sized products requiring high power such as electric vehicles and hybrid vehicles, power storage devices for storing surplus power or renewable energy, and backup power storage devices.

In order to manufacture such a secondary battery, first, electrode active material slurry is applied to a positive electrode collector and a negative electrode collector to manufacture a positive electrode and a negative electrode, and then, the electrodes are laminated on both sides of a separator, thereby forming an electrode assembly having a predetermined shape. Further, the electrode assembly is accommodated in a battery case, an electrolyte solution is injected therein and then the battery case is sealed.

The electrode assembly is classified into various types. For example, the electrode assembly is classified into a simple stack type, in which a positive electrode, a separator, and a negative electrode are simply and continuously stacked to cross each other without manufacturing a unit cell, a lamination & stack (L&S) type, in which unit cells are manufactured using positive electrodes, separators, and negative electrodes and then are stacked, a stack & folding (S&F) type, in which a plurality of electrodes or unit cells are attached to be separated from each other on one surface of a separator sheet, of which one side is long, and then the separator sheet is repeatedly folded from one end thereof in the same direction, and a Z-folding type, in which a plurality of electrodes or unit cells are alternately attached on one surface and the other surface of a separator sheet, of which one side is long, and then a process, in which the separator sheet is folded from one end thereof in a specific direction and then folded in an opposite direction, is alternately and repeatedly performed.

Among them, in order to manufacture the lamination & stack type electrode assembly, the stack & fold type electrode assembly, or the Z-folding type electrode assembly, the unit cell may be manufactured first. In general, in order to manufacture the unit cell, the separator may be stacked on each of top and bottom surfaces of a center electrode, and then an upper electrode may be further stacked at the uppermost end. In addition, a laminating process in which heat and a pressure are applied to the stack, in which the electrode and the separator are stacked, may be performed. Since the lamination process is performed, the electrode and the separator may be bonded to each other to firmly form the unit cell.

However, in the related art, the electrode and the separator are not bonded to each other until the lamination process is performed on the stack, in which the electrode and the separator are stacked, but are only in contact with each other. Therefore, in order to perform the laminating process, there is a problem that the electrode is separated from a fixed position in the process of transferring the stack. In addition, since the laminating process applies high-temperature heat and a high pressure to the stack, the electrode may be damaged. Furthermore, recently, a separator capable of adhering to an electrode even with low-temperature heat and a low pressure has been developed, but the separator consumes an excessively high manufacturing cost, which is not economical and also deteriorates process efficiency.

As a way to solve this problem, a method for manufacturing an adhesive is considered, but in this case, the adhesive exists on the surface of the electrode so as not to exert a proper function of the electrode at a corresponding portion, thereby deteriorating battery performance.

JP 2017-050215 A addresses the problem of how to provide a method for manufacturing a lithium ion secondary battery, which enables the rise in productivity. As solution, it is suggested: A method for manufacturing a lithium ion secondary battery comprises the steps of: applying an adhesive to a lithium ion secondary battery electrode and/or separator, thereby gluing the electrode to the separator into a laminate; and immersing the laminate in an electrolytic solution. An adhesive which dissolves in the electrolytic solution is used as the adhesive.

US 6,503,657 B1 discloses a nonaqueous electrolyte secondary battery, comprising an electrode group including a positive electrode, a negative electrode including a material for absorbing-desorbing lithium ions, and a separator arranged between the positive electrode and the negative electrode, a nonaqueous electrolyte impregnated in the electrode group and including a nonaqueous solvent and a lithium salt dissolved in the nonaqueous solvent, and a jacket for housing the electrode group and having a thickness of.mm or less, wherein the nonaqueous solvent gamma-butyrolactone in an amount larger than% by volume and not larger than% by volume based on the total amount of the nonaqueous solvent.

### DISCLOSURE OF THE INVENTION

### TECHNICAL PROBLEM

The present invention has been devised to solve the above problems, and an object of the present invention is to provide a secondary battery and a method for manufacturing the same, which is capable of preventing an electrode or a separator from being separated from a fixed position when manufacturing a unit cell by stacking the electrode and the separator.

In particular, an object of the present invention is to provide a secondary battery and a method for manufacturing the same, which is capable of reducing production costs, reducing a defective rate in a process, which is caused by high-temperature heat and a high pressure, and preventing performance of the battery from being deteriorated, when compared to a method for manufacturing a radical unit cell through a lamination according to the related art.

### TECHNICAL SOLUTION

The invention is set out in the appended claims. A method for manufacturing a secondary battery according to the present invention comprises manufacturing an electrode assembly by alternately stacking an electrode and a separator and applying an adhesive to at least one surface of the electrode and the separator to adhere the electrode and the separator to each other; and manufacturing a battery cell by accommodating the electrode assembly together with an electrolyte solution in a pouch case and sealing the pouch case, wherein at least portion of the adhesive is dissolved in the electrolyte solution, and thereby a mark, which the adhesive was applied to, is formed on the separator.

The step of manufacturing the battery cell may further comprise a formation process of charging the battery cell at a temperature that is higher than a room temperature to activate the battery cell, wherein the at least portion of the adhesive may be dissolved in the electrolyte solution in the formation process.

The formation process may be performed at a temperature of 50 degrees Celsius or more and 70 degrees Celsius or less.

The formation process may further comprise a process of compressing both side surfaces of the initial cell by using a jig.

The formation process may be performed at a temperature of 55 degrees Celsius or more and 65 degrees Celsius or less, and the adhesive may be completely dissolved in the electrolyte solution in the formation process so that the adhesive is removed from a surface of the electrode.

The adhesive may be an acrylate-based adhesive, and the electrolyte solution may be an organic solvent.

The secondary battery manufacturing method may further comprise manufacturing a radical unit, wherein the radical unit may be a unit which the electrode and the separator are stacked, wherein the electrode assembly may be manufactured by attaching a fixing tape around an electrode stack, in which a plurality of radical units are stacked.

The step of manufacturing the radical unit may comprise: unwinding a lower separator from a lower separator reel; applying the adhesive to at least portion of one surface of the unwound lower separator, which faces an upper side, through a first nozzle; positioning a first electrode on one surface of the lower separator to which the adhesive is applied; unwinding an upper separator from an upper separator reel; applying the adhesive to at least portion of one surface of the unwound upper separator, which is in contact with the first electrode, through a second nozzle; applying the adhesive to at least portion of the other surface of the upper separator, which faces the upper side, through a third nozzle; and positioning a second electrode on the other surface of the upper separator, to which the adhesive is applied, after applying the adhesive through the third nozzle.

The first nozzle, the second nozzle, and the third nozzle may apply the adhesive in a form a plurality of dots.

The secondary battery manufacturing method may further comprise manufacturing a radical unit, wherein the radical unit is a unit which the electrode and the separator are stacked, the separator being folded to cover the electrode, wherein the electrode assembly is manufactured by repeatedly forming the radical unit.

The step of manufacturing the radical unit may comprise: unwinding an electrode sheet from an electrode reel to form a plurality of electrodes from the electrode sheet; unwinding the separator to be stacked with the electrode, from a separator reel; positioning the separator on an upper surface of a table; and applying the adhesive to at least portion of the separator which is positioned on the table and the electrode, through a nozzle, wherein the electrode comprises a first electrode and a second electrode.

The method may further comprise a folding step after the step of applying the adhesive, wherein in the folding step, when the first electrode is positioned on the separator, one side of the separator may be folded to cover the first electrode, and when the second electrode is positioned on the separator, the other side of the separator may be folded to cover the second electrode.

The nozzle may apply the adhesive in a form a plurality of dots.

A secondary battery according to the present invention may comprise an electrode assembly in which an electrode and a separator are alternately stacked; and a pouch case for accommodating the electrode assembly together with the electrolyte solution, wherein a mark, which at least one adhesive was applied to, remains on a surface of the separator, which is in contact with the electrode, and the mark, which the adhesive was applied to, is a mark in which the first adhesive layer having been formed between the electrode and the separator was dissolved into the electrolyte solution.

The first adhesive layer may be formed by applying the adhesive in a form of a plurality of dots, and the mark, which the adhesive was applied to, is formed in the form of dots at a position where the first adhesive layer is formed.

The adhesive may be an acrylate-based adhesive, and the electrolyte solution may be an organic solvent.

The electrode may comprise a first electrode and a second electrode, the separator may comprise an upper separator and a lower separator, and the electrode assembly may have a structure in which the lower separator, the first electrode, the upper separator, and the second electrode are alternately stacked.

The electrode may comprise a first electrode and a second electrode, and the electrode assembly may be configured such that: the first electrode is positioned on the separator, and one side of the separator is folded to cover the first electrode, and the second electrode is positioned on the separator, and the other side of the separator is folded to cover the second electrode.

An electrode tab may be formed at one end of the electrode, a second adhesive layer may be formed between the electrode tab and the separator, and the second adhesive layer comprises an adhesive component that is not dissolved into the electrolyte solution.

The second adhesive layer may be formed by applying the adhesive in a form of a plurality of dots.

### ADVANTAGEOUS EFFECTS

The secondary battery and the method for manufacturing the same according to the present invention are configured such that an electrode assembly, in which an electrode and a separator are alternately stacked, and an adhesive is applied to at least one surface of the electrode and the separator to allow the electrode and the separator to adhere to each other, is accommodated together with an electrolyte solution in a pouch case, wherein while at least a portion of the adhesive is dissolved in the electrolyte solution, an application mark of the adhesive is formed on the separator, and the application mark of the adhesive does not include a component of the adhesive.

Therefore, the secondary battery and the method for manufacturing the same can prevent the electrode or the separator from being separated from a fixed position by the adhesive when manufacturing an electrode assembly by stacking an electrode and a separator. In addition, it is possible to prevent performance deterioration of the battery due to the adhesive by being dissolved the adhesive in the electrolyte solution in the battery cell.

### BRIEF DESCRIPTION OF THE DRAWINGS

FIG. 1 is flowchart illustrating a method for manufacturing a secondary battery according to an embodiment of the present invention.
FIG. 2 is a perspective view illustrating a radical unit manufacturing step in the method for manufacturing the secondary battery according to an embodiment of the present invention.
FIG. 3 is a front view illustrating the radical unit manufacturing step in the method for manufacturing the secondary battery according to an embodiment of the present invention.
FIG. 4 is a cross-sectional view of an electrode assembly formed by stacking radical units manufactured through the radical unit manufacturing step in the method for manufacturing the secondary battery according to an embodiment of the present invention.
FIG. 5 is a cross-sectional view of an electrode assembly formed by stacking radical units manufactured through the radical unit manufacturing step in the method for manufacturing the secondary battery according to another embodiment of the present invention.
FIGS. 6 to 9 are schematic views illustrating the radical unit manufacturing step in the method for manufacturing the secondary battery according to another embodiment of the present invention.
FIG. 10 is a cross-sectional view of an electrode assembly is manufactured by repeatedly forming the radical unit manufactured through the radical unit manufacturing step in the method for manufacturing the secondary battery according to another embodiment of the present invention.
FIG. 11 is a cross-sectional view of an electrode assembly is manufactured by repeatedly forming the radical unit manufactured through the radical unit manufacturing step in the method for manufacturing the secondary battery according to another embodiment of the present invention.
FIGS. 12 and 13 are exploded perspective views of a radical unit manufactured through the radical unit manufacturing step in the method for manufacturing the secondary battery according to another embodiment of the present invention.
FIG. 14 is a perspective view illustrating an initial cell manufacturing step in the method for manufacturing the secondary battery according to another embodiment of the present invention.
FIG. 15 is a front view illustrating a formation process in a method for manufacturing a secondary battery according to an embodiment of the present invention.
FIG. 16 is a view showing an application mark of the adhesive remaining on the surface of the separator.

### MODE FOR CARRYING OUT THE INVENTION

Hereinafter, preferred embodiments of the present invention will be described in detail with reference to the accompanying drawings so that those of ordinary skill in the art can easily carry out the present invention. However, the present invention may be implemented in several different forms and is not limited or restricted by the following examples.

In order to clearly explain the present invention, detailed descriptions of portions that are irrelevant to the description or related known technologies that may unnecessarily obscure the gist of the present invention have been omitted, and in the present specification, reference symbols are added to components in each drawing. In this case, the same or similar reference numerals are assigned to the same or similar elements throughout the specification.

Also, terms or words used in this specification and claims should not be restrictively interpreted as ordinary meanings or dictionary-based meanings, but should be interpreted as meanings and concepts conforming to the scope of the present invention on the basis of the principle that an inventor can properly define the concept of a term to describe and explain his or her invention in the best ways.

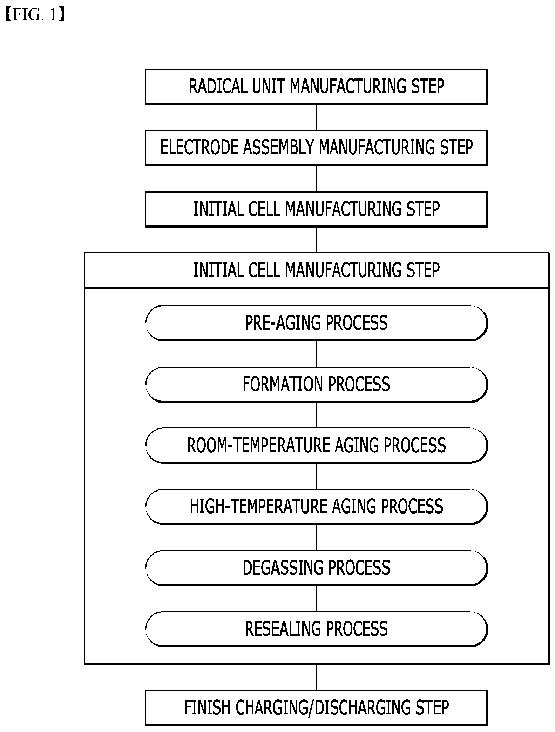

FIG. 1 is flowchart illustrating a method for manufacturing a secondary battery according to an embodiment of the present invention.

Referring to FIGS. 1 to 3, a method for manufacturing a secondary battery according to an embodiment of the present invention may include a radical unit manufacturing step, an electrode assembly manufacturing step, an initial cell manufacturing step, and a final cell manufacturing step.

In the method for manufacturing a secondary battery according to an embodiment of the present invention, a radical unit manufacturing step and an electrode assembly manufacturing step will be mainly described below.

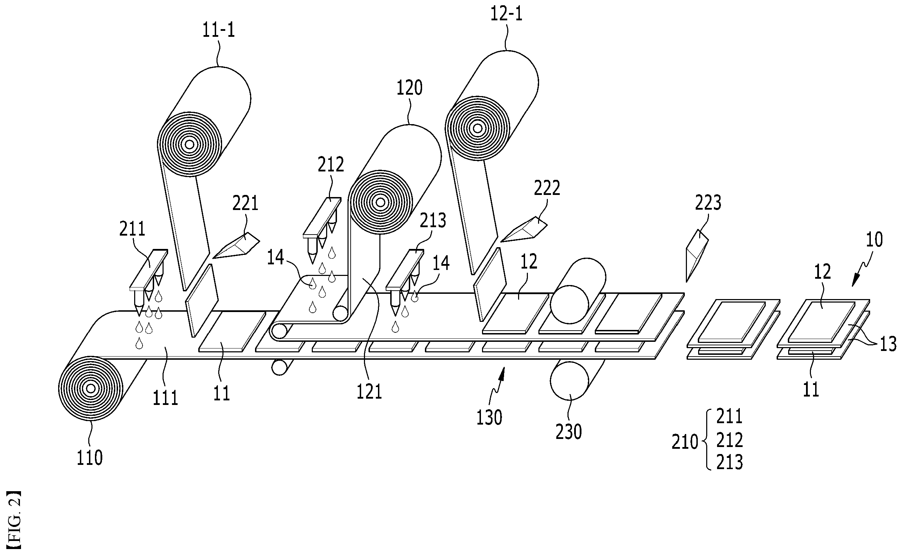

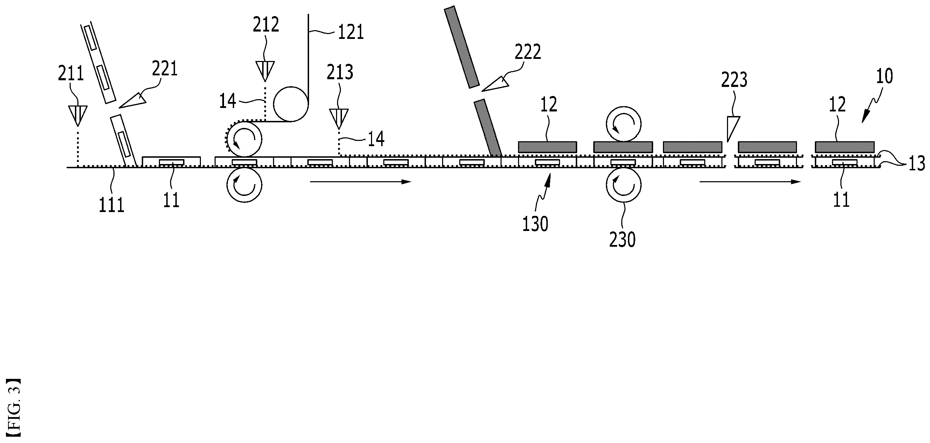

FIG. 2 is a perspective view illustrating a radical unit manufacturing step in the method for manufacturing the secondary battery according to an embodiment of the present invention. FIG. 3 is a front view illustrating the radical unit manufacturing step in the method for manufacturing the secondary battery according to an embodiment of the present invention.

First, in the embodiment of the present invention, a radical unit 10 may be a stacked unit of an electrode and a separator 13. That is, the electrode and the separator 13 are sequentially stacked to form one radical unit 10, and when a plurality of radical units 10 are stacked, an electrode stack 20 may be formed.

In the method for manufacturing the secondary battery according to the embodiment of the present invention, the radical unit manufacturing step may be a step of applying an adhesive 14 to at least one surface of the electrode and the separator 13 to manufacture the radical unit 10 in which the electrode and the separator 13 adhere to each other.

Referring to FIGS. 2 and 3, the radical unit manufacturing step may include a step of unwinding a lower separator sheet 111 from a lower separator reel 110. In addition, the radical unit manufacturing step may include a step of applying an adhesive 14 to at least a portion of one surface of the unwound lower separator sheet 111, which faces an upper side, through a first nozzle 211. The first nozzle 211 may apply the adhesive 14 in the form of a plurality of dots. Next, a step of sealing a first electrode 11 on one surface of the lower separator sheet 111 to which the adhesive 14 is applied by the first nozzle 211, may be followed. The first electrode 11 is configured so that a sheet of the first electrode 11 unwound from a first electrode reel 11-1 is cut to a predetermined size so as to be seated on one surface of the lower separator sheet 111. The first electrode 11 and the lower separator may adhere to each other by the adhesive 14 applied by the first nozzle 211.

In addition, the method for manufacturing the secondary battery according to the embodiment of the present invention may include a step of unwinding an upper separator sheet 121 from an upper separator reel 120. When the upper separator sheet 121 is unwound, a step of applying the adhesive 14 to at least a portion of one surface of the unwound upper separator sheet 121, which is in contact with the first electrode 11, through a second nozzle 212 may be performed. The second nozzle 212 may apply the adhesive 14 in the form of a plurality of dots.

Referring to FIG. 2, after the second nozzle 212 applies the adhesive 14 to one surface of the upper separator sheet 121, one surface and the other surface of the upper separator sheet 121 may be inverted to each other. This is because the adhesive 14 is applied in a form that falls from an upper side to a lower side, and the one surface of the upper separator sheet 121, which is in contact with the first electrode 11, faces the lower side in order to be in contact with the first electrode 11, and thus, the state when the adhesive 14 is applied and the state when the adhesive 14 adheres to the first electrode 11 may be forms that are inverted upside down.

When the upper separator sheet 121 is inverted upside down to adhere to the first electrode 11, a step of applying the adhesive 14 to at least a portion of the other surface of the upper separator sheet 121, which face the upper side, through a third nozzle 213 may be performed. That is, the third nozzle 213 may apply the adhesive 14 to an upper portion of the stack, in which the lower separator sheet 111, the first electrode 11, and the upper separator sheet 121 are sequentially stacked upward from the lower side. In this case, the third nozzle 213 may apply the adhesive 14 in the form of a plurality of dots.

In addition, after the third nozzle 213 applies the adhesive 14 in this manner, in the method for manufacturing the secondary battery according to the embodiment of the present invention, the radical unit manufacturing step may include a step of seating the second electrode 12 on the other surface of the upper separator sheet 121 to which the adhesive 14 is applied. The second electrode 12 may be formed by cutting a sheet of the second electrode 12, which is unwound from a second electrode reel 12-1, by using a second cutter 222. As a result, a four-layered structure may be formed. That is, after the step of seating the second electrode 12, the lower separator sheet 111, the first electrode 11, the upper separator sheet 121, and the second electrode 12 may be sequentially stacked to form a four-layered stack 130.

In addition, a step in which a pressing nip roll 230 is disposed on each of both vertical surfaces of the four-layered stack 130 to apply a pressure to the four-layered stack 130 while rotating may be further performed. A delaminated portion within the four-layered stack 130 may be prevented from occurring by the pressure applying step due to the pressing nip roll 230. Thus, the electrode and the separator 13 may closely adhere to each other.

As illustrated in FIGS. 2 and 3, after the step of applying the pressure to the four-layered stack 130, a step of cutting the four-layered stack 130 at a predetermined interval by using the cutter to form the radical unit 10 may be further performed. In this case, a portion of the upper separator sheet 121 and a portion of the lower separator sheet 111, which are disposed at a spaced portion between the electrodes, may be cut using a third cutter 223 to manufacture the radical unit 10.

According to the radical unit manufacturing step in the method for manufacturing the secondary battery according to the embodiment of the present invention, when the electrode and the separator are stacked to manufacture the unit cell (i.e., the radical unit), the adhesive 14 may be previously applied whenever the electrode is seated on the separator sheets 111 and 121 to prevent the electrode from being displaced even if the expensive separator is not used.

In addition, since there is no need to perform the laminating process, a defective rate in the process caused by high-temperature heat and a high pressure may be reduced. Also, since the laminate is capable of being removed, a unit cell manufacturing apparatus may be reduced in volume, and the manufacturing process may be simplified.

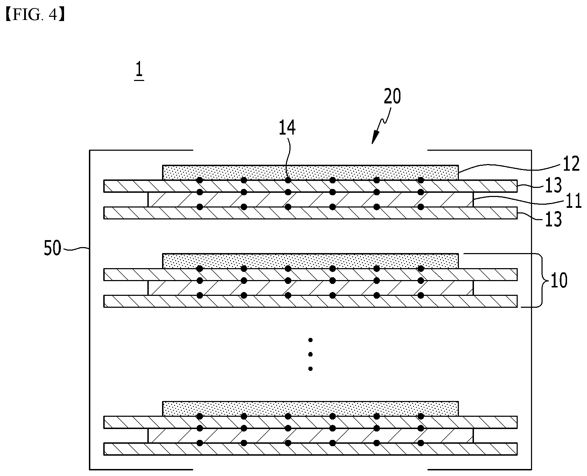

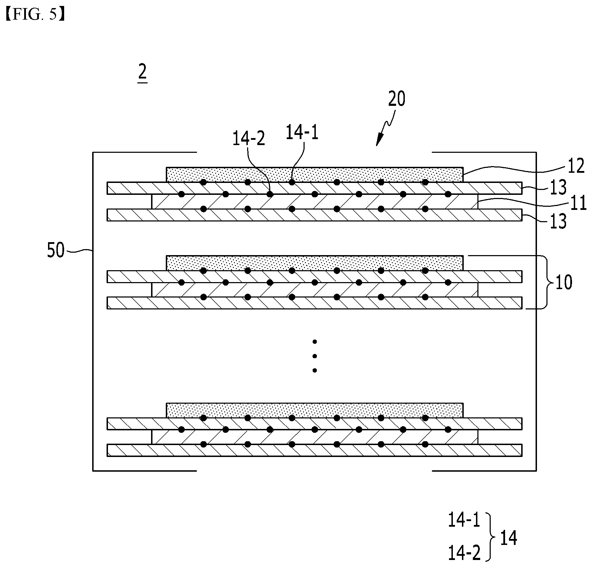

FIG. 4 is a cross-sectional view of the electrode assembly 1 formed by stacking the radical units 10 manufactured through the radical unit manufacturing step in the method for manufacturing the secondary battery according to Embodiment 1 of the present invention. FIG. 5 is a cross-sectional view of an electrode assembly formed by stacking radical units manufactured through the radical unit manufacturing step in the method for manufacturing the secondary battery according to another embodiment of the present invention.

Referring to FIG. 4, in the method for manufacturing the secondary battery according to the embodiment of the present invention, the electrode assembly manufacturing step may be a step of attaching a fixing tape 50 to a circumference of the electrode stack 20 formed by stacking the plurality of radical units 10 to manufacture the electrode assembly 1. Here, the electrode assembly manufacturing step may be performed separately from the above-mentioned radical unit manufacturing step, or the above-mentioned radial unit manufacturing step may be included in the electrode assembly manufacturing step.

In the radical unit 10, the electrodes 11 and 12 and the separator 13 may be in a state of adhering to each other by the adhesive 14. As a result, the electrodes 11 and 12 and the separator 13 may be maintained in alignment by adhesion force of the adhesive 14. In addition, the relative positions of the radical units 10, which are stacked, may be fixed by the fixing tape 50 attached to the outside of the radical units 10. That is, the stacked alignment state of the radical units 10 can be maintained by fixing force of the fixing tape 50. For reference, the state of the stack before attaching the fixing tape 50 may be called the electrode stack 20, and the state of the stack after attaching the fixing tape 50 may be called the electrode assembly 1.

Further, in the electrode assembly 1 manufactured in the embodiment of the present invention, the adhesive 14 may be disposed at the same position between the electrodes 11 and 12 and the separator 13. As an example, as shown in FIG. 4, in the electrode assembly 1 of the embodiment of the present invention, the adhesive 14 located between the lower portion of the first electrode 11 and the separator 13, and the adhesive 14 located between the upper portion of the first electrode 11 and the separator 13 may be arranged on the same vertical line with respect to the bottom surface, and the interval at which the adhesive 14 is disposed may be equal to each other. This can be similarly explained even in the case of the adhesive 14 located between the second electrode 12 and the separator 13.

Consequently, in the electrode assembly 1 manufactured in the embodiment of the present invention, the adhesive 14 is disposed at the same position between the electrodes 11 and 12 and the separator 13, which has the advantage that the process time and efficiency can be increased.

Further, in the electrode assembly 2 manufactured in the method for manufacturing a secondary battery according to another embodiment of the present invention, the adhesive 14 may be disposed between the electrodes 11 and 12 and the separator 13, and the adhesive 14 disposed in layers adjacent to each other may be disposed in a crossed manner. As an example, as shown in FIG. 5, in the electrode assembly 2 of the embodiment of the present invention, a first adhesive 14-1 located between the lower portion of the first electrode 11 and the separator 13, and a second adhesives 14-2 located between the upper portion of the first electrode 11 and the separator 13 may be disposed to cross each other. At this time, the positions of the first adhesive 14-1 and the second adhesive 14-2 only cross each other, and the applied intervals may be equal to each other. This can be similarly explained even in the case of the adhesive 14 located between the second electrode 12 and the separator 13.

As an example, in the above-mentioned radical unit manufacturing step, as the position of at least one of the first nozzle 211, the second nozzle 212, and the third nozzle 213 is adjusted, the first adhesive 14-1 and the second adhesive 14-2 may be disposed to cross each other.

As another example, in the above-mentioned radical unit manufacturing step, a separate nozzle is additionally disposed in addition to the first nozzle 211, the second nozzle 212, and the third nozzle 213, so that the first adhesive 14-1 and the second adhesive 14-2 may be disposed to cross each other. More specifically, a separate nozzle is disposed at a position different from the first nozzle 211, the second nozzle 212, and the third nozzle 213, so that one of the first adhesive 14-1 and the second adhesive 14-2 is applied from the first nozzle 211, the second nozzle 212, and the third nozzle 213. Further, the other one of the first adhesive 14-1 and the second adhesive 14-2 is applied from the separate nozzle, so that the first adhesive 14-1 and the second adhesive 14-2 may be disposed to cross each other.

However, the present invention is not limited thereto, and a structure in which the first adhesive 14-1 and the second adhesive 14-2 is disposed to cross each other may be applied by various methods to perform manufacture.

Therefore, in the electrode assembly 2 manufactured in the embodiment of the present invention, the adhesive 14 is disposed between the electrodes 11 and 12 and the separator 13, while the adhesive 14 disposed in layers adjacent to each other is disposed in a crossed manner, so that an increase in the thickness of the electrode assembly 2 due to the adhesive 14 can be minimized. In addition to this, the adhesives 14 disposed in layers adjacent to each other cross each other, and thus, the adhesive 14 can be more easily dissolved in the electrolyte solution contained in the initial cell 0 described later.

In the method for manufacturing the secondary battery according to another embodiment of the present invention, the radical unit manufacturing step and the electrode assembly manufacturing step will be mainly described below.

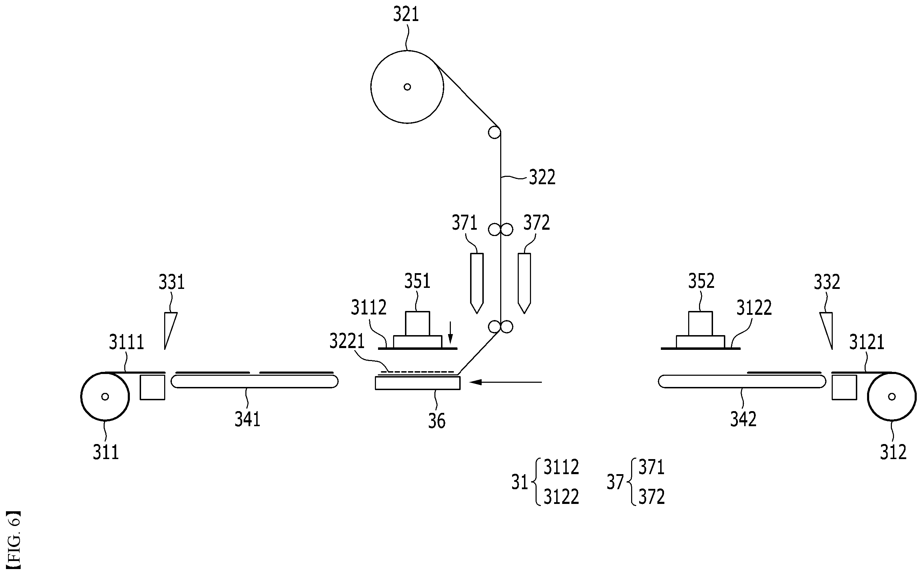

FIGS. 6 to 9 are schematic views illustrating a radical unit manufacturing step of a method for manufacturing the secondary battery according to another embodiment of the present invention.

First, in the embodiment of the present invention, the radical unit 30 may be a unit in which the separator 322 is folded to cover the electrode 31, and the electrode 31 and the separator 322 are stacked. That is, the radical unit 30 may be configured such that one side and the other side of the separator 322 are sequentially folded to cover the electrode 31, while the electrode 31 and the separator 322 are sequentially stacked. A electrode stack 40 in which the radical unit 10 is repeatedly formed a plurality of times can be manufactured.

Referring to FIGS. 6 to 9, the method for manufacturing the secondary battery according to the embodiment of the present invention includes: a step of unwinding electrode sheets 3111 and 3121 from electrode reels 311 and 312 to form a plurality of electrodes 31 from the electrode sheets 3111 and 3121; a step of unwinding the electrode 31 and the stacked separator 322 from a separator reel 321; a step of seating the separator 322 on an upper surface of a table 36; and a step of applying the adhesive to at least a portion of one surface of the separator 322 seated on the table 36 and the electrode 31, through a nozzle 37, wherein the electrode 31 includes a first electrode 3112 and a second electrode 3112.

More specifically, referring to FIG. 6, in the method for manufacturing the secondary battery according to the embodiment of the present invention, when the first electrode sheet 3111 is unwound from the first electrode reel 311, a first cutter 331 cuts the first electrode sheet 3111 to form a plurality of first electrodes 3112. Then, when the first transfer device 341 transfers the first electrode 3112, a first header 351 adsorbs the first electrode 3112.

Meanwhile, referring to FIG. 6, when the separator 322 is unwound from the separator reel 121, the first area 3221 of the separator 322 is seated on the upper surface of the table 36. Then, as shown in FIG. 6, the first nozzle 371 may apply an adhesive to at least a portion of the first area 3221 of the separator 3222. Here, the first nozzle 371 may apply an adhesive in the form of a plurality of dots.

Then, the table 36 can move towards the first transfer device 341, and the first header 351 on which the first electrode 3112 is adsorbed can also move toward the table 36. However, the present invention is not limited thereto, the table 36 can be fixed. When the first header 351 is located above the table 36, the first header 351 can seat the first electrode 3112 in the first area 3221 of the separator 322 to which the adhesive is applied, as shown in FIG. 6.

However, the present invention is not limited thereto, and unlike FIG. 6, an adhesive is not applied to the first area 3221 of the separator 322, but an adhesive may be previously applied to the lower portion of the first electrode 3112. That is, in a state in which the adhesive is previously applied to the lower portion of the first electrode 3112, the first electrode 3112 can be seated on the first area 3221 of the separator 322 by the first header 351.

Further, the method for manufacturing the secondary battery according to the embodiment of the present invention further includes a folding step after the step of applying the adhesive. In the folding step, when the first electrode 3112 is seated on the separator 322, one side of the separator 322 can be folded to cover the first electrode 3112, and when the second electrode 3122 is seated on the separator 322, the other side of the separator 322 can be folded to cover the second electrode 3122.

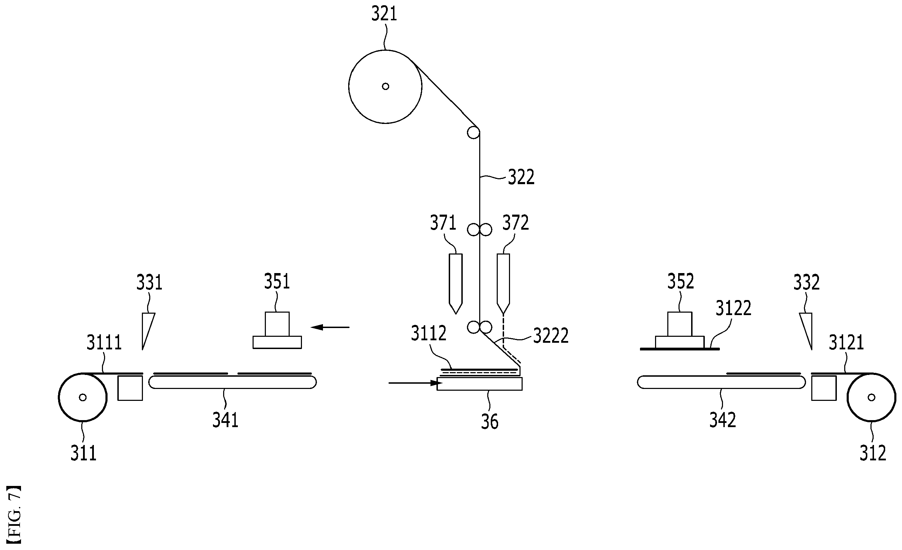

More specifically, referring to FIG. 7, after the first electrode 3112 is seated in the first area 3221, the table 36 moves toward the second transfer device 342 that transfers the second electrode 3122. Then, one side of the separator 322 can be folded, and the second area 3222 of the separator 322 can cover the first electrode 3112. Here, before the first electrode 3112 is covered with the second area 3222 of the separator 322, an adhesive may be previously applied to the upper portion of the first electrode 3112 or the second area 3222 of the separator 322 by the first nozzle 371.

Meanwhile, when the second electrode sheet 3121 is unwound from the second electrode reel 312, the second cutter 332 may cut the second electrode sheet 3121 to form a plurality of second electrodes 3122. Thereafter, when the second transfer device 342 transfers the second electrode 3122, the second header 352 adsorbs the second electrode 3122.

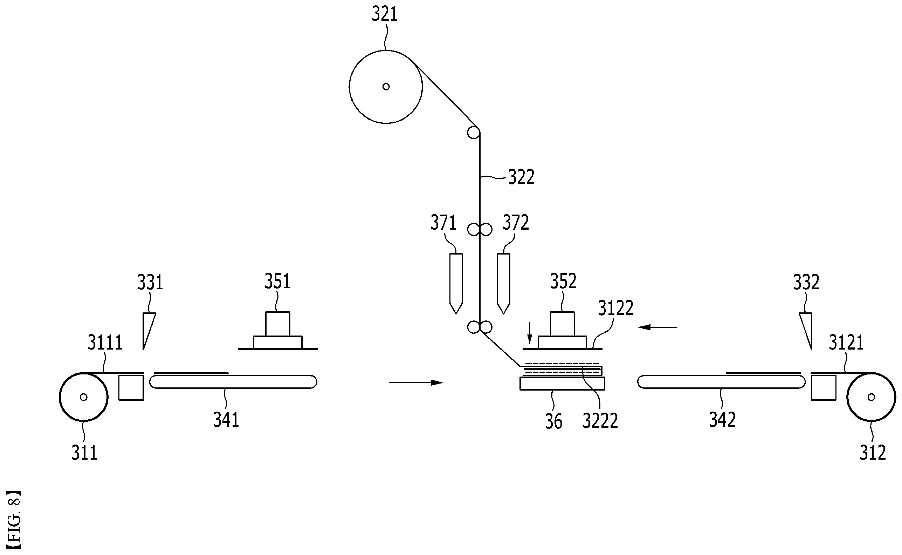

Further, as shown in FIGS. 7 and 8, when the second area 3122 covers the first electrode 3112, a second nozzle 372 located on the upper side of the second area 3122 applies an adhesive to at least a portion of the second area 3222 of the separator 322. Here, the second nozzle 372 may apply an adhesive in the form of a plurality of dots.

Then, referring to FIG. 8, the table 36 can move toward the second transfer device 342, and the second header 352 on which the second electrode 3122 is adsorbed may also move toward the table 36. However, the present invention is not limited thereto, and the table 36 may be fixed. When the second header 352 is located on the upper side of the table 36, the second header 352 may seat the second electrode 3122 in the second area 3222 of the separator 322 to which the adhesive is applied, as shown in FIG. 8.

However, the present invention is not limited thereto, and unlike FIG. 8, an adhesive is not applied to the second area 3222 of the separator 322, and an adhesive may be previously applied to the lower portion of the second electrode 3122. That is, in a state in which the adhesive is previously applied to the lower portion of the second electrode 3122, the second electrode 3122 may be seated on the second area 3222 of the separator 322 by the second header 352.

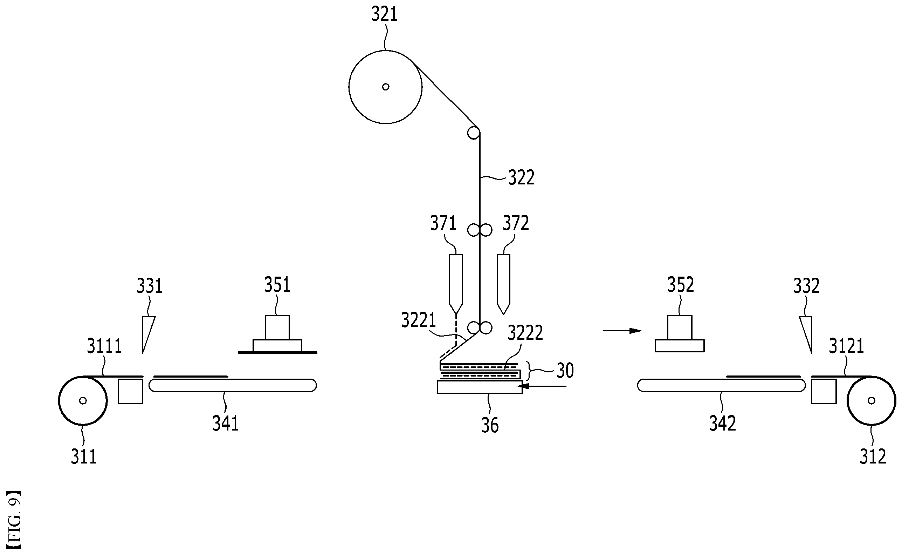

Thereafter, referring to FIG. 9, after the second electrode 3122 is seated in the second area 3222, the table 36 moves toward the first transfer device 341 that transfers the first electrode 3112. However, the present invention is not limited thereto, and the table 36 may be fixed. Then, the other side of the separator 322 may be folded, so that the first area 3221 of the separator 322 may cover the second electrode 3122. Here, before the second electrode 3122 is covered with the first area 3221 of the separator 322, an adhesive may be previously applied to the upper portion of the second electrode 3122 or the first area 3221 of the separator 322 by the second nozzle 372.

Further, as shown in FIG. 9, when the first area 3221 covers the second electrode 3122, a first nozzle 371 located on the upper side of the first area 3221 applies an adhesive to at least a portion of the first area 3221 of the separator 322. Here, the first nozzle 371 may apply an adhesive in the form of a plurality of dots.

That is, by repeating the above-mentioned processes, the radical unit can be manufactured by the method for manufacturing the secondary battery according to the embodiment of the present invention.

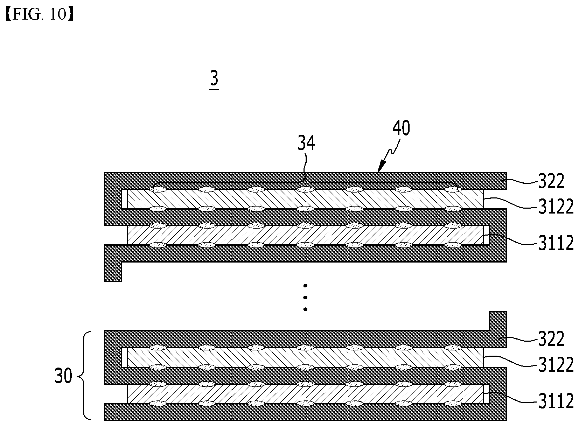

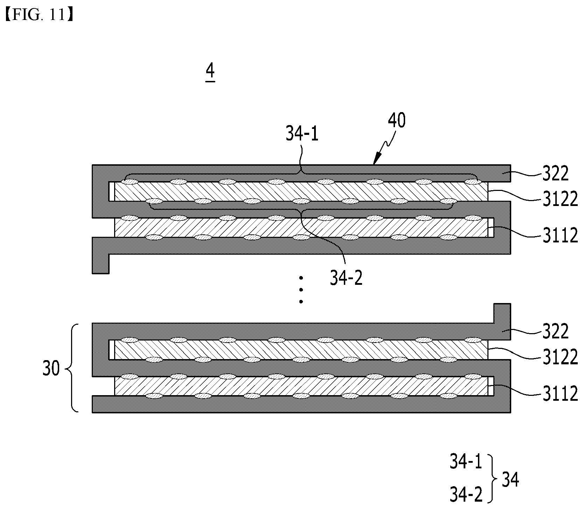

FIG. 10 is a cross-sectional view of an electrode assembly is manufactured by repeatedly forming the radical unit manufactured through the radical unit manufacturing step in the method for manufacturing the secondary battery according to another embodiment of the present invention. FIG. 11 is a cross-sectional view of an electrode assembly is manufactured by repeatedly forming the radical unit manufactured through the radical unit manufacturing step in the method for manufacturing the secondary battery according to another embodiment of the present invention.

Referring to FIG. 10, in the method for manufacturing the secondary battery according to another embodiment of the present invention, the electrode assembly manufacturing step may be a step of manufacturing the electrode assembly 3 by attaching a fixing tape 50 to a circumference of an electrode stack 40, in which a plurality of radical units 30 are repeatedly formed a plurality of times, as in the electrode laminate 20 of FIG. 4. Further, unlike the electrode assembly 1 of FIG. 4, the electrode assembly 3 may omit the fixing tape 50 as shown in FIG. 10. Further, instead of the fixing tape 50 of FIG. 4, in the electrode assembly 3, one end of the separator 322 may surround a portion of the outer surface of the electrode stack 40. Here, the electrode assembly manufacturing step may be performed separately from the above-mentioned radical unit manufacturing step, or the above-mentioned radical unit manufacturing step may be included in the electrode assembly manufacturing step.

As in the radical unit 10 of FIG. 4, the radical unit 30 of the embodiment of the present invention may be in a state in which the electrodes 3112 and 3122 and the separator 322 are adhered to each other with an adhesive 34. Thereby, the electrodes 3112 and 3122 and the separator 322 can be maintained in alignment by adhesive force of the adhesive 34.

The electrode stacks 40 of the embodiment of the present invention is configured such that the separator 322 covers the upper and lower portions and one side surface of the electrodes 3112 and 3122, and thus, can maintain the stacked alignment state of the radical units 30 even without a separate fixing tape 50 as shown in FIG. 4. In addition, when the fixing tape 50 of FIG. 4 is attached to the outside of the electrode stack 40 of this embodiment or one end of the separator 322 is wrapped around the outside, the stacked alignment state of the radical units 30 can be more stably maintained.

Further, in the electrode assembly 3 manufactured in the embodiment of the present invention, the adhesive 34 may be disposed at the same position between the electrodes 3112 and 3122 and the separator 322. As an example, as shown in FIG. 10, in the electrode assembly 3 of this embodiment, the adhesive 34 located between the lower portion of the first electrode 3112 and the separator 322 and the adhesive 34 located between the upper portion of the first electrode 3112 and the separator 322 may be disposed on the same vertical line with respect to the bottom surface, respectively, and the interval at which the adhesive 34 is disposed may be equal to each other. This may be similarly explained even in the case of the adhesive 34 located between the second electrode 3122 and the separator 322.

Therefore, in the electrode assembly 3 manufactured in the embodiment of the present invention, the adhesive 34 is disposed at the same position between the electrodes 3112 and 3122 and the separator 322, which has the advantage that the process time and efficiency can be increased.

Further, in the electrode assembly 4 manufactured in the method for manufacturing the secondary battery according to another embodiment of the present invention, the adhesive 34 may be disposed between the electrodes 3112 and 3122 and the separator 322, and the adhesives 34 disposed in layers adjacent to each other may be disposed in a crossed manner. As an example, as shown in FIG. 11, in the electrode assembly 4 of this embodiment, a first adhesive 34-1 located between the lower portion of the first electrode 3112 and the separator 322, and a second adhesives 34-2 located between the upper portion of the first electrode 3112 and the separator 322 may be disposed to cross each other. At this time, the positions of the first adhesive 34-1 and the second adhesive 34-2 are only crossed each other, and the intervals at which they are applied can be equal to each other. This may be similarly explained even in the case of the adhesive 14 located between the second electrode 3122 and the separator 322.

As an example, in the above-mentioned radical unit manufacturing step, as the position of at least one of the first nozzle 371 and the second nozzle 372 is adjusted, the first adhesive 34-1 and the second adhesive 34-2 may be disposed to cross each other.

As another example, in the above-mentioned radical unit manufacturing step, a separate nozzle may be additionally disposed in addition to the first nozzle 371 and the second nozzle 372, so that the first adhesive 34-1 and the second adhesive 34-2 can be disposed to cross each other. More specifically, the separate nozzle is disposed at a position different from the first nozzle 371 and the second nozzle 372, so that one of the first adhesive 34-1 and the second adhesive 34-2 is applied from the first nozzle 371 and the second nozzle 372, and the other one of the first adhesive 34-1 and the second adhesive 34-2 is applied from the separate nozzle, so that the first adhesive 34-1 and the second adhesive 34-2 can be disposed to cross each other.

However, the present invention is not limited thereto, and a structure in which the first adhesive 34-1 and the second adhesive 34-2 is disposed to cross each other may be applied by various methods to perform manufacture.

Therefore, in the electrode assembly 4 manufactured in the embodiment of the present invention, the adhesive 34 is disposed between the electrodes 3112 and 3122 and the separator 322, and the adhesives 34 disposed in layers adjacent to each other are disposed in a crossed manner, so that an increase in the thickness of the electrode assembly 4 due to the adhesive 34 can be minimized. In addition, the adhesives 34 disposed in layers adjacent to each other cross each other, and thus, the adhesives 34 can be more easily dissolved in the electrolyte solution contained in the initial cell 0 described later.

The above-described basic units 10 and 30 will be mainly described below.

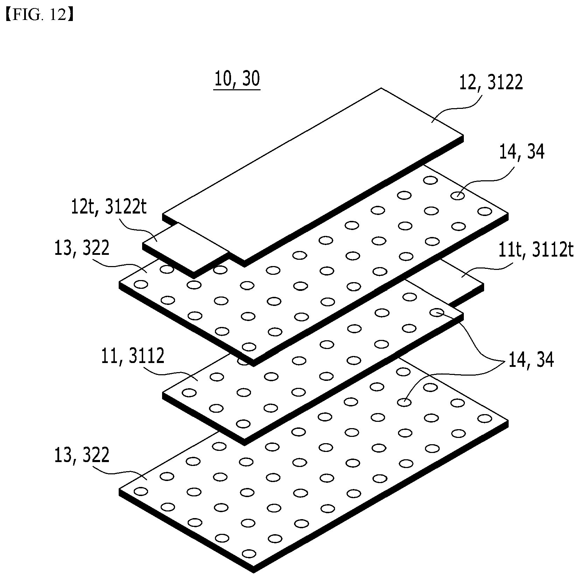

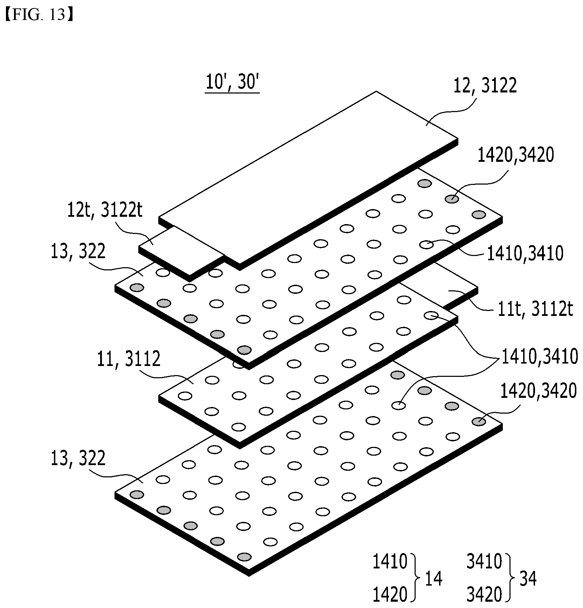

FIGS. 12 and 13 are exploded perspective views of a radical unit manufactured through the radical unit manufacturing step in the method for manufacturing the secondary battery according to another embodiment of the present invention.

Referring to FIG. 12, the radical unit 10 may have a structure in which the separator 13, the first electrode 11, the separator 13, and the second electrode 12 are alternately stacked as shown in FIGS. 2 to 5. Here, the separator 13 located under the first electrode 11 is called an upper separator, and the separator 13 located under the second electrode 12 is called an upper separator.

Further, even in the case of the radical unit 30, as shown in FIGS. 6 to 11, the radical unit is in a zigzag shape in which the separator 322 is folded to cover the electrodes 3112 and 3122, and may have a structure in which a first electrode 3112, a separator 322, and a second electrode 3122 are alternatively stacked. However, in FIG. 11, for convenience of explanation, the surface on which the separator 322 is folded is omitted.

In the radical units 10 and 30, first electrode tabs 11t and 3112t may be formed at one end of the first electrodes 11 and 3112, and second electrode tabs 12t and 3122t may be formed at one end of the second electrodes 12 and 3122. Here, the first electrodes 11 and 3112 and the second electrodes 12 and 3122 may be disposed such that the first electrode tabs 11t and 3112t and the second electrode tabs 12t and 3122t face different directions.

Here, adhesive layers 14 and 34 may be formed between the first electrodes 11 and 3112 and the separators 13 and 322 and between the second electrodes 13 and 3122 and the separators 12 and 322. As an example, the adhesive layers 14 and 34 may be formed by applying an adhesive in the form of a plurality of dots as shown in FIG. 12. Further, the plurality of dots may be arranged at regular intervals. Further, the adhesive layers 14 and 34 may include an adhesive component that is dissolved in the electrolyte solution contained in the initial cell 0 described later.

Therefore, in the radical units 10 and 30 of the embodiment of the present invention, the adhesive layers 14 and 34 are arranged in the form of a plurality of dots, and can be more easily dissolved in the electrolyte solution. In addition to this, the adhesive layers 14 and 34 include an adhesive component dissolved in the electrolyte solution, and in the final battery cell, the adhesive layers 14 and 34 do not remain on the surfaces of the first electrodes 11 and 3112 and the second electrodes 12 and 3122, thereby capable of preventing deterioration of cell performance due to the adhesive layers 14 and 34.

Referring to FIG. 13, the radical units 10' and 30' can be described almost in the same way as the radical units 10 and 30 of FIG. 12, and the adhesive layers 14 and 34 will be mainly described below.

In the radical units 10' and 30' according to the embodiment of the present invention, the adhesive layers 14 and 34 may include first and second adhesive layers 1410 and 3410 and second adhesive layers 1420 and 3420. Here, the first adhesive layers 1410 and 3410 is located between the central portion of the first electrodes 11 and 3112 and the separators 13 and 322 and between the central portion of the second electrodes 12 and 3122 and the separators 13 and 322.

As an example, as shown in FIG. 13, the second adhesive layers 1420 and 3420 are located at both ends of the separators 12 and 322 adjacent to the first electrode tabs 11t and 3112t or the second electrode tabs 12t and 3122t. More specifically, the second adhesive layers 1420 and 3420 may be located between the first electrode tabs 11t and 3112t and the separators 13 and 322 and between the second electrode tabs 12t and 3122t.

As another example, unlike FIG. 13, the second adhesive layers 1420 and 3420 can be formed between the first electrode tabs 11t and 3112t and the separators 13 and 322 only at the portion where the first electrode tabs 11t and 3112t and the separators 13 and 322 face each other, and can be formed between the second electrode tabs 12t and 3122t and the separators 13 and 322 only at the portion where the second electrode tabs 12t and 3122t and the separators 13 and 322 face each other.

At this time, the first adhesive layers 1410 and 3410 and the second adhesive layers 1420 and 3420 may be formed by applying an adhesive in the form of a plurality of dots, respectively.

Here, the first adhesive layers 1410 and 3410 may include an adhesive component dissolved in an electrolyte solution contained in the initial cell 0 described later, similar to the adhesive layers 14 and 34 of FIG. 12. Alternatively, the second adhesive layers 1420 and 3420 includes an adhesive component that is not dissolved in the electrolyte solution.

As an example, in the above-mentioned radical unit manufacturing step, as the type of adhesive applied from at least one of the nozzles 21 of FIGS. 2 and 3 or at least one of the nozzles 37 of FIGS. 6 to 9 is changed in the manufacturing process, first adhesive layers 1410 and 3410 and second adhesive layers 1420 and 3420 may be formed, respectively.

As another example, in the above-mentioned radical unit manufacturing step, a separate nozzle is additionally disposed in addition to the nozzle 21 of FIGS. 2 and 3 or the nozzle 37 of FIGS. 6 to 9, so that first adhesive layers 1410 and 3410 and second adhesive layers 1420 and 3420 may be formed, respectively. More specifically, the separate nozzles are disposed adjacent to both ends of the separators 12 and 322, so that the first adhesive layers 1410 and 3410 are formed from the nozzle 21 of FIGS. 2 and 3 or the nozzle 37 of FIGS. 6 to 9, and second adhesive layers 1420 and 3420 may be formed from the separate nozzle.

However, the present invention is not limited thereto, and the first adhesive layers 1410 and 3410 and the second adhesive layers 1420 and 3420 may be formed by applying different adhesives by various methods.

Therefore, in the radical units 10' and 30' of the embodiment of the present invention, the first adhesive layers 1410 and 3410 are located between the central portions of the first electrodes 11 and 3112 and the separators 13 and 322 and between the central portion of the second electrode 12 and 3122 and the separators 13 and 322, so that in the final battery cell, the first adhesive layers 15 and 35 do not remain on the surfaces of the first electrodes 11 and 3112 and the second electrodes 12 and 3122, thereby preventing deterioration of cell performance due to the first adhesive layers 1410 and 3410.

In addition to this, in the radical units 10' and 30' of the embodiment of the present invention, the second adhesive layers 1420 and 3420 are located between the first electrode tabs 11t and 3112t and the separators 13 and 322 and between the second electrode tab 12t and 3122t), so that in the final battery cell, the second adhesive layers 1420 and 3420 are not dissolved in the electrolyte solution, thereby preventing the separators 13 and 322 facing the first electrode tabs 11t and 3112t and the second electrode tabs 12t and 3122t from being folded. Further, the second adhesive layers 1420 and 3420 can prevent the first electrodes 11 and 3112 and the second electrodes 12 and 3122 from being separated from the separators 13 and 322 in the final battery cell.

Further, the second adhesive layers 1420 and 3420 are located between the pair of separators 13 and 322 facing each other, while they may be formed in a portion except the portion where the separators 13 and 322 and the first electrodes 11 and 3112 and/or the second electrodes 12 and 3122 come into contact.

In other words, the second adhesive layers 1420 and 3420 are positioned between a pair of separators 13 and 322 facing each other, and can be formed in a portion excluding a portion where the separators 13 and 322 and the first electrodes 11 and 3112 and/or the second electrodes 12 and 3122 are in contact with each other. In other words, the second adhesive layers 1420 and 3420 are located between the pair of separators 13 and 322 facing each other, and do not come into contact with the first electrodes 11 and 3112 and the second electrodes 12 and 3122.

Therefore, in the radical units 10' and 30' of the embodiment of the present invention, the second adhesive layers 1420 and 3420 are formed at a position avoiding a portion where the first electrodes 11 and 31112 and/or the second electrodes 12 and 3122 comes into contact with the separators 13 and 322, so that the second adhesive layers 1420 and 3420 can prevent the first electrodes 11 and 3112 and the second electrodes 12 and 3122 from interfering with the movement of lithium ions between the separators 13 and 322. That is, the second adhesive layers 1420 and 3420 can prevent the above-mentioned separators 13 and 322 from being folded without degrading cell performance, and can prevent the first electrodes 11 and 3112 and the second electrodes 12 and 3122 from being separated from the separators 13 and 322.

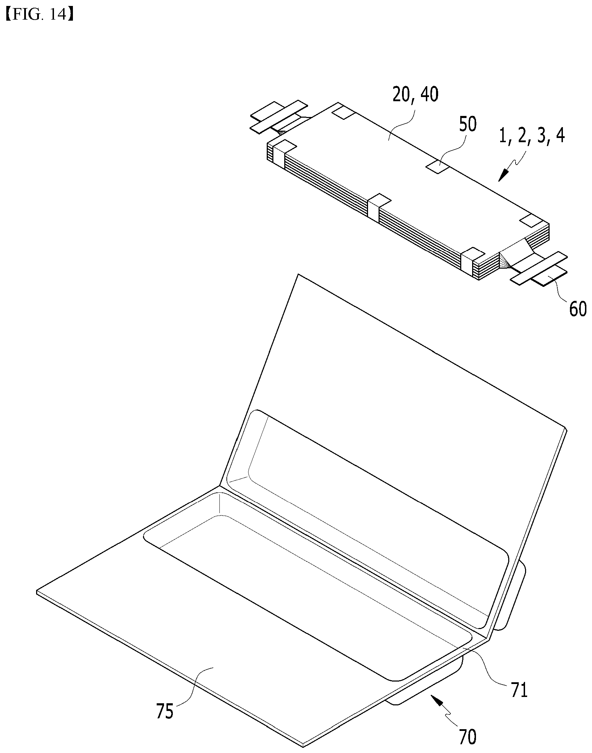

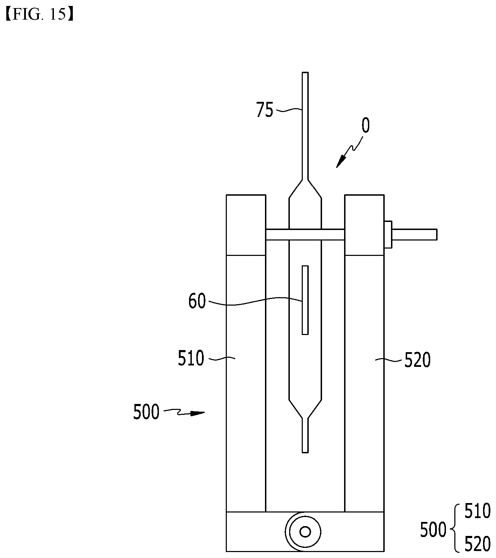

FIG. 14 is a perspective view illustrating an initial cell manufacturing step in the method for manufacturing the secondary battery according to another embodiment of the present invention. FIG. 15 is a front view illustrating a formation process in a method for manufacturing a secondary battery according to an embodiment of the present invention.

Referring to FIG. 14, the method for manufacturing the secondary battery according to an embodiment of the present invention may include an initial cell manufacturing step after the electrode assembly manufacturing step.

The initial cell manufacturing step may be a step of accommodating the electrode assemblies 1, 2, 3, and 4 in a pouch case 70 and injecting an electrolyte solution into the pouch case 70 to seal a pouch case edge 71, thereby manufacturing an initial cell 0. The pouch case 70 may include a gas pocket part 75 extending to one side of the cup part in which the electrode assemblies 1, 2, 3, and 4 are accommodated. After the electrode assemblies 1, 2, 3 and 4 and the electrolyte solution are accommodated in the cup part, the pouch case edge 71 can be sealed.

In this case, the sealing may be performed at an edge of the cup part and an outer edge of the gas pocket part 75. That is, an edge of an area on which the cup part and the gas pocket part 75 are combined with each other may be sealed in the form of a closed curve so that the combined area of the cup part and the gas pocket part 75 is sealed from the outside. That is, after the sealing, the cup part and the gas pocket part 75 may be sealed from the outside, but may communicate with each other.

When the initial cell 0 is manufactured to be sealed from the outside, the step of manufacturing a final cell by post-processing the initial cell 0 may be performed. In the final cell manufacturing step, the adhesive applied to the surface of at least one of the electrode and the separators 13 and 322 in the foregoing radical unit manufacturing step may be dissolved. The electrolyte solution contained in the initial cell 0 may be an organic solvent, and the meaning that the adhesive 14 is dissolved may mean that the adhesives 14 and 34 are dissolved and penetrated into the electrolyte solution, which is the organic solvent.

Thus, it may mean that the adhesives 14 and 34 applied to the surface of the electrode or separators 13 and 322 are reduced in the applied area, or the applied adhesives 14 and 34 is completely removed so as not to remain on the surface of the electrode.

Here, in the case of the electrodes 11, 12, and 31, it may mean that the adhesives 14 and 34 do not remain on the electrode surface.

Further, in the case of the separators 13 and 322, a portion of the adhesives 14 and 34 may be permeated into the separators 13 and 322 in that the separators 13 and 322 are generally a porous sheet. At this time, in the final cell manufacturing step described above, the adhesives 14 and 34 that have penetrated into the separators 13 and 322 may be dissolved into the electrolyte solution, and in this process, the application mark of the adhesives 14 and 34 may remain on the separators 13 and 322.

Here, the application mark of the adhesives 14 and 34 may mean that the components of the adhesives 14 and 34 do not remain, but a portion of the outer surfaces of the separators 13 and 322 are deformed by the adhesives 14 and 34. However, the present invention is not limited thereto, and the application mark of the adhesives 14 and 34 may mean a mark that can confirm whether the adhesives 14 and 34 are applied by various methods, such as a mark that can confirm whether the adhesives 14 and 34 are applied with the naked eye.

Therefore, the application mark of the adhesives 14 and 34 formed on the separators 13 and 322 may be formed at the same position as the position where the adhesives 14 and 34 are applied.

Particularly, the adhesives 14 and 34 for allowing the electrode and the separator to adhere to each other, which is used in the method for manufacturing the secondary battery according to an embodiment of the present invention, may be an acrylate-based adhesive. As the acrylate-based adhesives 14 and 34 are used, it may be possible to dissolve the adhesives 14 and 34 into the electrolyte solution.

In the method for manufacturing the secondary battery according to the embodiment of the present invention, the final cell manufacturing step may include a formation process of charging the initial cell 0 at a high temperature that is greater than room temperature to activate the initial cell 0. The formation process (activation process) may be a process in which an SEI layer is formed on a surface of an electrode plates of the electrode assembly through the charging process so as to be charged, and thus, the secondary battery may supply power.

In the final cell manufacturing step, the formation process may be performed at a temperature of 45 degrees or more. In addition, at least a portion of the adhesives 14 and 34 may be dissolved in the formation process. Also, more preferably, in the final cell manufacturing step, the formation process may be performed at a temperature between 50 degrees and 70 degrees. The dissolution of the adhesive 14 is more likely to occur at a temperature of 50 degrees, which is higher than 45 degrees. Also, it may be undesirable because the performance of the cell product is deteriorated at a temperature of 70 degrees or more.

Also, referring to FIG. 15, in the final cell manufacturing step of the method for manufacturing the secondary battery according to the embodiment of the present invention, the formation process may include a jig pressing process of pressing both side surfaces of an initial cell 0 by using a jig 500. Here, a left side of the initial cell 0 may be pressed using a left jig 510, and a right side of the initial cell 0 may be pressed using the right jig 520. When the initial cell 0 is pressed using the jig, a gas generated inside the electrode assemblies 1, 2, 3 and 4 may smoothly move to the gas pocket part 75. The gas moving to the gas pocket part 75 may be smoothly discharged to the outside of the cell in a subsequent degassing process. If the jig pressing process is performed during the formation process, the process of dissolving the adhesive 14 in the electrolyte solution may be easily performed.

Here, the jig pressing process may include a process of applying and releasing a pressure of the jig 500 to/from both side surfaces of the initial cell 0. That is, a process of one cycle, in which the jig 500 applies and releases a pressure to/from the initial cell 0 is repeated at least twice.

The process of one cycle in which the pressure of the jig 500 is applied and released may be a process of directly applying physical force to the adhesives 14 and 34 by alternately applying positive and negative pressures during dissolution. Therefore, it is possible to obtain an effect of allowing the dissolution of the adhesives 14 and 34 to significantly well occur.

In this case, a control device may be connected to a jig device for more systematic operation. As a result, a positive pressure time and a negative pressure time may be adjusted, and an intensity of the positive pressure and an intensity of the negative pressure may also be controlled. Therefore, a more effective adhesive dissolution system can be implemented.

Particularly, in the final cell manufacturing step of the method for manufacturing the secondary battery according to the embodiment of the present invention, the formation process may include a jig pressing process which is performed at a temperature of 55 degrees to 65 degrees and presses both side surfaces of the initial cell 0 by using the jig 500. In this case, the adhesive 14 is completely dissolved in the formation process, and thus, a mark of the adhesives 14 and 34 do not remain on the surface of the electrode. In particular, as described above, the application mark of the adhesives 14 and 34 may remain on the separators 13 and 322.

When the adhesives 14 and 34 remain on the surface of the electrode, an area on which the adhesives 14 and 34 remains may become a non-reaction area on which an electrode reaction does not occur, and thus the battery performance may be deteriorated. However, as in the present invention, when the adhesives 14 and 34 are completely dissolved and then disappeared from the surfaces of the electrode or separators 13 and 322, the non-reaction area due to the adhesives 14 and 34 may be disappeared to prevent the performance from being deteriorated, thereby realizing excellent battery performance.

Meanwhile, the final cell manufacturing step in the method for manufacturing the secondary battery according to the embodiment of the present invention may further include a pre-aging process of storing the initial cell 0 at room temperature before the formation process. The pre-aging process at room temperature may be performed for about 1.5 days. The pre-aging process may be a process that gives time so that the electrolyte is sufficiently impregnated between the electrode and the separators 13 and 322. Of course, at least a portion of the adhesives 14 and 34 may be dissolved even in the pre-aging process.

In addition, the final cell manufacturing step in the method for manufacturing the secondary battery according to the embodiment of the present invention may further include a room-temperature aging process of storing the initial cell 0 at room temperature after the formation process. The room-temperature aging process may be performed for about 1 day. In addition, the final cell manufacturing step may further include a high-temperature aging process of storing the initial cell 0 at a temperature of 60 degrees to 65 degrees after the room temperature aging process and before the degassing process.

In addition, the final cell manufacturing step in the method for manufacturing the secondary battery according to the embodiment of the present invention may include the degassing process after the high-temperature aging process. The degassing process may be a process of discharging the internal gas of the initial cell 0 to the outside. The gas discharged in the degassing process may be the internal gas that is mainly generated in the formation process and stored in the gas pocket part 75. In the degassing process, a through-hole may be formed in the gas pocket part 75 to allow the gas to be discharged to the outside.

The final cell manufacturing step may include a re-sealing process of re-sealing the initial cell 0 so as to be sealed from the outside again after the degassing process. As a result, the final cell manufacturing step may manufacture the final cell. The adhesives 14 and 34 may be dissolved so as not to remain on the surface of the internal electrode or the separators 13 and 322 of the manufactured final cell. In particular, as described above, the application mark of the adhesives 14 and 34 may remain on the separators 13 and 322.

Meanwhile, the method for manufacturing the secondary battery according to the embodiment of the present invention may further include a finish charging/discharging step of charging and discharging the final cell after the final cell manufacturing step. The final charge/discharge step may include a process of measuring a battery capacity of the final cell and may include a process of finally charging the battery to a set voltage for shipment of the final product.

Hereinafter, the contents of the present invention will be described with reference to more specific experimental examples, but the following experimental examples are for illustrative purposes only, and the scope of the present invention is not limited thereto.

### <Experimental Example- Confirmation of application mark of adhesive>

A battery cell was manufactured accommodating an electrode assembly, in which a positive electrode, a negative electrode, and a separator were alternately stacked, together with an electrolyte solution. Here, the adhesive was applied in the form of a plurality of dots between the positive electrode and the separator and between the negative electrode and the separator. Here, the separator is CCS (Ceramic Coated Separator), the adhesive includes an acrylate-based adhesive material, and the electrolyte solution may be a standard electrolyte solution in which ethylene carbonate (EC) and ethylmethyl carbonate (EMC) are mixed in a ratio of 3:7.

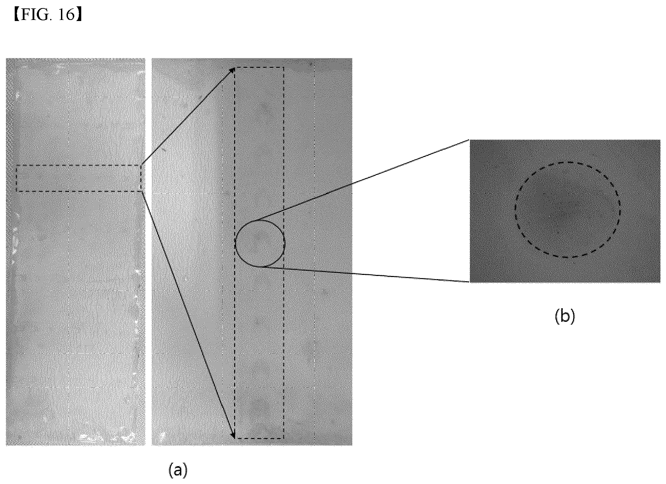

Then, the manufactured battery cell was charged, the separator was separated from the charged battery cell, the separated separator was washed with acetone and dried to remove the electrolyte solution absorbed in the separated separator, and then the surface of the separator was observed. The results are shown in FIG. 16. FIG. 16 (a) is an image confirmed with the naked eye, and FIG. 16 (b) is an image taken by magnifying it with a microscope.

### <Analysis of Experimental Results - Confirmation of Application Mark of Adhesive>

Referring to FIGS. 16 (a) and (b), in the separator separated from the charged battery cell, it can be confirmed that the adhesive leaves a mark on the separator. In particular, when magnified and photographed with a microscope enlarged as shown in FIG. 16(b), it can be confirmed that an application mark of the adhesive left on the separator are more easily observed.

That is, in the battery cell according to the present embodiment, it can be confirmed that the adhesive was applied between the positive electrode and the separator and between the negative electrode and the separator in the electrode assembly unit through the application mark of the adhesive left on the outer surface of the separator.

While the embodiments of the present invention have been described with reference to the specific embodiments and the accompanying drawings, it will be apparent to those skilled in the art that various changes and modifications may be made without departing from the scope of the invention as defined in the following claims.

### [Description of the Symbols]

0: Initial cell
1,2,3,4: Electrode assembly
70: Pouch case
71: Pouch case edge
75: Gas pocket part
10, 30: Radical unit
11, 3112: First electrode
11-1, 311: First electrode reel
12, 3122: Second electrode
12-1, 312: Second electrode reel
13, 322: Separator
14, 34: Adhesive
20, 40: Electrode stack
50: Fixing tape
60: Electrode lead
110: Lower separator reel
111: Lower separator sheet
120: Upper separator reel
121: Upper separator sheet
130: Four-layered stack
210, 371: Nozzle
211, 371: First nozzle
212, 372: Second nozzle
213: Third nozzle
221, 331: First cutter
222, 332: Second cutter
223: Third cutter
230: Pressing nip roll
300: Jig
310: Left jig
320: Right jig

## Claims

1. A method for manufacturing a secondary battery, the method comprising:
manufacturing an electrode assembly (1) by alternately stacking an electrode (11, 12) and a separator (13) and applying a first adhesive (14, 34) to a central portion of the electrode (11, 12) and the separator (13) to adhere the electrode (11, 12) and the separator (13) to each other and applying a second adhesive (14, 34) to both ends of the separator (13) adjacent to tabs of the electrode (11, 12); and
manufacturing a battery cell by accommodating the electrode assembly (1-4) together with an electrolyte solution in a pouch case (70) and sealing the pouch case (70),
wherein at least portion of the first adhesive (14, 34) is dissolved in the electrolyte solution, and thereby a mark, which the first adhesive (14, 34) was applied to, is formed on the separator (13), and the second adhesive (14, 34) comprises an adhesive component that is not dissolved in the electrolyte solution.

2. The method of claim 1, wherein:
the step of manufacturing the battery cell further comprises a formation process of charging the battery cell at a temperature that is higher than a room temperature to activate the battery cell,
wherein the at least portion of the first adhesive (14, 34) is dissolved in the electrolyte solution in the formation process.

3. The method of claim 2, wherein:
the formation process is performed at a temperature of 50 degrees Celsius or more and 70 degrees Celsius or less.

4. The method of claim 3, wherein:
the formation process comprises a process of compressing both side surfaces of the initial cell by using a jig (500, 510, 520).

5. The method of claim 4, wherein:
the formation process is performed at a temperature of 55 degrees Celsius or more and 65 degrees Celsius or less, and
the first adhesive (14, 34) is completely dissolved in the electrolyte solution in the formation process so that the adhesive is removed from a surface of the electrode (11, 12).

6. The method of claim 1, wherein:
the first adhesive (14, 34) is an acrylate-based adhesive (14, 34), and
the electrolyte solution is an organic solvent.

7. The method of claim 1, further comprising:
the secondary battery manufacturing method further comprises manufacturing a radical unit (10), wherein the radical unit (10) is a unit which the electrode (11, 12) and the separator (13) are stacked,
wherein the electrode assembly (1) is manufactured by attaching a fixing tape (50) around an electrode stack (20, 40), in which a plurality of radical units (10) are stacked.

8. The method of claim 7, wherein the step of manufacturing the radical unit (10) comprises:
unwinding a lower separator (13) from a lower separator reel (110, 121, 321);
applying the first or the second adhesive (14, 34) to at least portion of one surface of the unwound lower separator (13), which faces an upper side, through a first nozzle (211, 371);
positioning a first electrode (11, 12) on one surface of the lower separator (13) to which the adhesive is applied;
unwinding an upper separator from an upper separator reel (120);
applying the first or the second adhesive (14, 34) to at least portion of one surface of the unwound upper separator, which is in contact with the first electrode (11, 12), through a second nozzle (212, 372);
applying the first or the second adhesive (14, 34) to at least portion of the other surface of the upper separator, which faces the upper side, through a third nozzle (213); and
positioning a second electrode (11, 12) on the other surface of the upper separator, to which the adhesive is applied, after applying the adhesive through the third nozzle (213).

9. The method of claim 8, wherein the first nozzle (211, 371), the second nozzle (212, 372), and the third nozzle (213) apply the first or second adhesive (14, 34) in a form a plurality of dots.

10. The method of claim 1, wherein:
the secondary battery manufacturing method further comprises manufacturing a radical unit (10), wherein the radical unit (10) is a unit which the electrode (11, 12) and the separator (13) are stacked, the separator (13) being folded to cover the electrode (11, 12),
wherein the electrode assembly (1) is manufactured by repeatedly forming the radical unit (10).

11. The method of claim 10, wherein the step of manufacturing the radical unit (10) comprises:
unwinding an electrode sheet (3111, 3121) from an electrode reel (11, 12) to form a plurality of electrodes (11, 12) from the electrode sheet (3111, 3121);
unwinding the separator (13) to be stacked with the electrode (11, 12), from a separator reel (110, 121, 321);
positioning the separator (13) on an upper surface of a table (36); and
applying the first or the second adhesive (14, 34) to at least portion of the separator (13) which is positioned on the table (36) and the electrode (11, 12), through a nozzle (21, 37),
wherein the electrode (11, 12) comprises a first electrode (11, 12) and a second electrode (11, 12).

12. The method of claim 11, further comprising a folding step after the step of applying the adhesive,
wherein in the folding step,
when the first electrode (11, 12) is positioned on the separator (13), one side of the separator (13) is folded to cover the first electrode (11, 12), and
when the second electrode (11, 12) is positioned on the separator (13), the other side of the separator (13) is folded to cover the second electrode (11, 12).

13. The method of claim 11, wherein:
the nozzle (21, 37) applies the first or the second adhesive (14, 34) in a form a plurality of dots.

14. A secondary battery comprising:
an electrode assembly (1-4) in which an electrode (11, 12) and a separator (13) are alternately stacked; and
a pouch case (70) for accommodating the electrode assembly (1-4) together with the electrolyte solution,
wherein a mark, which a portion of first adhesive (14, 34) was applied to, remains on a central portions of the separator (13), which is in contact with the electrode (11, 12), and a portion of second adhesive (14, 34) remains at both ends of the separator (13) adjacent to tabs of the electrode (11, 12), and
the mark, which the first adhesive (14, 34) was applied to, is a mark in which the first adhesive (14, 34) having been formed between the electrode (11, 12) and the separator (13) was dissolved into the electrolyte solution, and the second adhesive (14, 34) comprises an adhesive component that is not dissolved in the electrolyte solution.

15. The secondary battery of claim 14, wherein:
the first adhesive (14, 34) is formed by applying the adhesive in a form of a plurality of dots, and
the mark, which the first adhesive (14, 34) was applied to, is formed in the form of dots at a position where the first adhesive (14, 34) is formed.

16. The secondary battery of claim 15, wherein:
the first adhesive (14, 34) is an acrylate-based adhesive (14, 34), and
the electrolyte solution is an organic solvent.

17. The secondary battery of claim 14, wherein:
the electrode (11, 12) comprises a first electrode (11, 12) and a second electrode (11, 12),
the separator (13) comprises an upper separator and a lower separator (13), and
the electrode assembly (1) has a structure in which the lower separator (13), the first electrode (11, 12), the upper separator, and the second electrode (11, 12) are alternately stacked.

18. The secondary battery of claim 14, wherein:
the electrode (11, 12) comprises a first electrode (11, 12) and a second electrode (11, 12), and
the electrode assembly (1-4) is configured such that:
the first electrode (11, 12) is positioned on the separator (13), and one side of the separator (13) is folded to cover the first electrode (11, 12), and
the second electrode (11, 12) is positioned on the separator (13), and the other side of the separator (13) is folded to cover the second electrode (11, 12).

19. The secondary battery of claim 17 or 18, wherein:
the second adhesive (14, 34) is formed by applying the adhesive in a form of a plurality of dots.

## Patentansprüche

1. Verfahren zur Herstellung einer Sekundärbatterie, wobei das Verfahren umfasst:
Herstellen einer Elektrodenanordnung (1) durch abwechselndes Stapeln einer Elektrode (11, 12) und eines Separators (13) und Aufbringen eines ersten Klebstoffs (14, 34) auf einen zentralen Abschnitt der Elektrode (11, 12) und des Separators (13), um die Elektrode (11, 12) und den Separator (13) aneinander zu kleben, und Aufbringen eines zweiten Klebstoffs (14, 34) auf beide Enden des Separators (13) neben Laschen der Elektrode (11, 12); und
Herstellen einer Batteriezelle durch Unterbringen der Elektrodenanordnung (1-4) zusammen mit einer Elektrolytlösung in einem Beutelgehäuse (70) und Versiegeln des Pouch-Gehäuses (70),
wobei mindestens ein Teil des ersten Klebstoffs (14, 34) in der Elektrolytlösung gelöst ist und dadurch eine Markierung, auf die der erste Klebstoff (14, 34) aufgebracht wurde, auf dem Separator (13) gebildet wird, und der zweite Klebstoff (14, 34) eine Klebstoffkomponente umfasst, die nicht in der Elektrolytlösung gelöst ist.

2. Verfahren nach Anspruch 1, wobei:
der Schritt des Herstellens der Batteriezelle ferner einen Bildungsprozess des Ladens der Batteriezelle bei einer Temperatur umfasst, die höher als eine Raumtemperatur ist, um die Batteriezelle zu aktivieren,
wobei der mindestens eine Teil des ersten Klebstoffs (14, 34) in dem Bildungsprozess in der Elektrolytlösung gelöst wird.

3. Verfahren nach Anspruch 2, wobei:
der Bildungsprozess bei einer Temperatur von 50 Grad Celsius oder mehr und 70 Grad Celsius oder weniger durchgeführt wird.

4. Verfahren nach Anspruch 3, wobei:
der Bildungsprozess einen Prozess des Komprimierens beider Seitenflächen der Ausgangszelle unter Verwendung einer Spannvorrichtung (500, 510, 520) umfasst.

5. Verfahren nach Anspruch 4, wobei:
der Bildungsprozess bei einer Temperatur von 55 Grad Celsius oder mehr und 65 Grad Celsius oder weniger durchgeführt wird, und
der erste Klebstoff (14, 34) in dem Bildungsprozess vollständig in der Elektrolytlösung gelöst wird, so dass der Klebstoff von einer Oberfläche der Elektrode (11, 12) entfernt wird.

6. Verfahren nach Anspruch 1, wobei:
der erste Klebstoff (14, 34) ein Klebstoff (14, 34) auf Acrylatbasis ist, und
die Elektrolytlösung ein organisches Lösungsmittel ist.

7. Verfahren nach Anspruch 1, ferner umfassend:
das Sekundärbatterie-Herstellungsverfahren ferner das Herstellen einer Radikaleinheit (10) umfasst, wobei die Radikaleinheit (10) eine Einheit ist, in der die Elektrode (11, 12) und der Separator (13) gestapelt sind,
wobei die Elektrodenanordnung (1) durch Anbringen eines Befestigungsbandes (50) um einen Elektrodenstapel (20, 40) herum hergestellt wird, in dem eine Vielzahl von Radikaleinheiten (10) gestapelt sind.

8. Verfahren nach Anspruch 7, wobei der Schritt des Herstellens der Radikaleinheit (10) umfasst:
Abwickeln eines unteren Separators (13) von einer unteren Separatorspule (110, 121, 321);
Aufbringen des ersten oder des zweiten Klebstoffs (14, 34) auf mindestens einen Teil einer Oberfläche des abgewickelten unteren Separators (13), die einer Oberseite zugewandt ist, durch eine erste Düse (211, 371);
Positionieren einer ersten Elektrode (11, 12) auf einer Oberfläche des unteren Separators (13), auf die der Klebstoff aufgebracht wird;
Abwickeln eines oberen Separators von einer oberen Separatorspule (120);
Aufbringen des ersten oder des zweiten Klebstoffs (14, 34) auf mindestens einen Teil einer Oberfläche des abgewickelten oberen Separators, die mit der ersten Elektrode (11, 12) in Kontakt steht, durch eine zweite Düse (212, 372);
Aufbringen des ersten oder des zweiten Klebstoffs (14, 34) auf mindestens einen Teil der anderen Oberfläche des oberen Separators, die der Oberseite zugewandt ist, durch eine dritte Düse (213); und
Positionieren einer zweiten Elektrode (11, 12) auf der anderen Oberfläche des oberen Separators, auf die der Klebstoff aufgebracht wird, nach dem Aufbringen des Klebstoffs durch die dritte Düse (213).

9. Verfahren nach Anspruch 8, wobei die erste Düse (211, 371), die zweite Düse (212, 372) und die dritte Düse (213) den ersten oder zweiten Klebstoff (14, 34) in Form einer Vielzahl von Punkten aufbringen.

10. Verfahren nach Anspruch 1, wobei:
das Sekundärbatterie-Herstellungsverfahren ferner das Herstellen einer Radikaleinheit (10) umfasst, wobei die Radikaleinheit (10) eine Einheit ist, in der die Elektrode (11, 12) und der Separator (13) gestapelt sind, wobei der Separator (13) gefaltet ist, um die Elektrode (11, 12) zu bedecken,
wobei die Elektrodenanordnung (1) durch wiederholtes Bilden der Radikaleinheit (10) hergestellt wird.

11. Verfahren nach Anspruch 10, wobei der Schritt des Herstellens der Radikaleinheit (10) umfasst:
Abwickeln einer Elektrodenfolie (3111, 3121) von einer Elektrodenspule (11, 12), um eine Vielzahl von Elektroden (11, 12) aus der Elektrodenfolie (3111, 3121) zu bilden;
Abwickeln des mit der Elektrode (11, 12) zu stapelnden Separators (13) von einer Separatorspule (110, 121, 321);
Positionieren des Separators (13) auf einer oberen Oberfläche eines Tisches (36); und
Aufbringen des ersten oder des zweiten Klebstoffs (14, 34) auf mindestens einen Teil des Separators (13), der auf dem Tisch (36) und der Elektrode (11, 12) positioniert ist, durch eine Düse (21, 37),
wobei die Elektrode (11, 12) eine erste Elektrode (11, 12) und eine zweite Elektrode (11, 12) umfasst.

12. Verfahren nach Anspruch 11, ferner umfassend einen Faltschritt nach dem Schritt des Aufbringens des Klebstoffs,
wobei in dem Faltschritt,
wenn die erste Elektrode (11, 12) auf dem Separator (13) positioniert ist, eine Seite des Separators (13) gefaltet wird, um die erste Elektrode (11, 12) zu bedecken, und
wenn die zweite Elektrode (11, 12) auf dem Separator (13) positioniert ist, die andere Seite des Separators (13) gefaltet wird, um die zweite Elektrode (11, 12) zu bedecken.

13. Verfahren nach Anspruch 11, wobei:
die Düse (21, 37) den ersten oder den zweiten Klebstoff (14, 34) in Form einer Vielzahl von Punkten aufbringt.

14. Sekundärbatterie, umfassend:
eine Elektrodenanordnung (1-4), in der eine Elektrode (11, 12) und ein Separator (13) abwechselnd gestapelt sind; und
ein Pouch-Gehäuse (70) zum Unterbringen der Elektrodenanordnung (1-4) zusammen mit der Elektrolytlösung,
wobei eine Markierung, auf die ein Teil des ersten Klebstoffs (14, 34) aufgebracht wurde, auf einem zentralen Abschnitt des Separators (13) verbleibt, der mit der Elektrode (11, 12) in Kontakt steht, und ein Teil des zweiten Klebstoffs (14, 34) an beiden Enden des Separators (13) neben Laschen der Elektrode (11, 12) verbleibt, und
die Markierung, auf die der erste Klebstoff (14, 34) aufgebracht wurde, eine Markierung ist, bei der der erste Klebstoff (14, 34), der zwischen der Elektrode (11, 12) und dem Separator (13) gebildet wurde, in der Elektrolytlösung gelöst wurde, und der zweite Klebstoff (14, 34) eine Klebstoffkomponente umfasst, die nicht in der Elektrolytlösung gelöst ist.

15. Sekundärbatterie nach Anspruch 14, wobei:
der erste Klebstoff (14, 34) durch Aufbringen des Klebstoffs in Form einer Vielzahl von Punkten gebildet wird, und
die Markierung, auf die der erste Klebstoff (14, 34) aufgebracht wurde, in Form von Punkten an einer Position gebildet wird, an der der erste Klebstoff (14, 34) gebildet wird.

16. Sekundärbatterie nach Anspruch 15, wobei:
der erste Klebstoff (14, 34) ein Klebstoff (14, 34) auf Acrylatbasis ist, und
die Elektrolytlösung ein organisches Lösungsmittel ist.

17. Sekundärbatterie nach Anspruch 14, wobei:
die Elektrode (11, 12) eine erste Elektrode (11, 12) und eine zweite Elektrode (11, 12) umfasst,
der Separator (13) einen oberen Separator und einen unteren Separator (13) umfasst, und
die Elektrodenanordnung (1) eine Struktur aufweist, in der der untere Separator (13), die erste Elektrode (11, 12), der obere Separator und die zweite Elektrode (11, 12) abwechselnd gestapelt sind.

18. Sekundärbatterie nach Anspruch 14, wobei:
die Elektrode (11, 12) eine erste Elektrode (11, 12) und eine zweite Elektrode (11, 12) umfasst, und
die Elektrodenanordnung (1-4) so konfiguriert ist, dass:
die erste Elektrode (11, 12) auf dem Separator (13) positioniert ist und eine Seite des Separators (13) gefaltet ist, um die erste Elektrode (11, 12) zu bedecken, und
die zweite Elektrode (11, 12) auf dem Separator (13) positioniert ist und die andere Seite des Separators (13) gefaltet ist, um die zweite Elektrode (11, 12) zu bedecken.

19. Sekundärbatterie nach Anspruch 17 oder 18, wobei:
der zweite Klebstoff (14, 34) durch Aufbringen des Klebstoffs in Form einer Vielzahl von Punkten gebildet wird.

## Revendications

1. Procédé de fabrication d'une batterie rechargeable, le procédé consistant à :
fabriquer un ensemble électrode (1) en empilant en alternance une électrode (11, 12) et un séparateur (13) et en appliquant un premier adhésif (14, 34) sur une partie centrale de l'électrode (11, 12) et du séparateur (13) pour coller l'électrode (11, 12) et le séparateur (13) l'un avec l'autre et en appliquant un deuxième adhésif (14, 34) sur les deux extrémités du séparateur (13) adjacentes aux languettes de l'électrode (11, 12) ; et
fabriquer un élément de batterie en recevant l'ensemble électrode (1-4) avec une solution d'électrolyte dans un boîtier de poche (70) et sceller le boîtier de poche (70),
dans lequel au moins une partie du premier adhésif (14, 34) est dissoute dans la solution d'électrolyte, et ainsi une marque, sur laquelle le premier adhésif (14, 34) a été appliqué, est formée sur le séparateur (13), et le deuxième adhésif (14, 34) comprend un composant adhésif qui n'est pas dissous dans la solution d'électrolyte.

2. Procédé selon la revendication 1, dans lequel :
l'étape de fabrication de l'élément de batterie comprend en outre un processus de formation de chargement de l'élément de batterie à une température qui est plus élevée que la température ambiante pour activer l'élément de batterie,
dans lequel ladite au moins une partie du premier adhésif (14, 34) est dissoute dans la solution d'électrolyte dans le processus de formation.

3. Procédé selon la revendication 2, dans lequel :
le processus de formation est effectué à une température égale ou supérieure à 50 degrés Celsius et égale ou inférieure à 70 degrés Celsius.

4. Procédé selon la revendication 3, dans lequel :
le processus de formation comprend un processus de compression des deux surfaces latérales de l'élément initial en utilisant un gabarit (500, 510, 520).

5. Procédé selon la revendication 4, dans lequel :
le processus de formation est effectué à une température égale ou supérieure à 55 degrés Celsius et égale ou inférieure à 65 degrés Celsius, et
le premier adhésif (14, 34) est complètement dissous dans la solution d'électrolyte dans le processus de formation de telle sorte que l'adhésif est retiré d'une surface de l'électrode (11, 12).

6. Procédé selon la revendication 1, dans lequel :
le premier adhésif (14, 34) est un adhésif à base d'acrylate (14, 34), et
la solution d'électrolyte est un solvant organique.

7. Procédé selon la revendication 1, comprenant en outre :
le procédé de fabrication de la batterie rechargeable consiste en outre à fabriquer une unité radicalaire (10), dans lequel l'unité radicalaire (10) est une unité sur laquelle l'électrode (11, 12) et le séparateur (13) sont empilés,
dans lequel l'ensemble électrode (1) est fabriqué en attachant un ruban de fixation (50) autour d'un empilement d'électrodes (20, 40), dans lequel une pluralité d'unités radicalaires (10) sont empilées.

8. Procédé selon la revendication 7, dans lequel l'étape de fabrication de l'unité radicalaire (10) consiste à :
dérouler un séparateur inférieur (13) d'une bobine de séparateur inférieur (110, 121, 321) ;
appliquer le premier adhésif ou le deuxième adhésif (14, 34) sur au moins une partie d'une surface du séparateur inférieur déroulé (13), qui est face à un côté supérieur, par une première buse (211, 371) ;
positionner une première électrode (11, 12) sur une surface du séparateur inférieur (13) sur laquelle l'adhésif est appliqué ;
dérouler un séparateur supérieur d'une bobine de séparateur supérieur (120) ;
appliquer le premier adhésif ou le deuxième adhésif (14, 34) sur au moins une partie d'une surface du séparateur supérieur déroulé, qui est en contact avec la première électrode (11, 12), par une deuxième buse (212, 372) ;
appliquer le premier adhésif ou le deuxième adhésif (14, 34) sur au moins une partie de l'autre surface du séparateur supérieur, qui est face au côté supérieur, par une troisième buse (213) ; et
positionner une deuxième électrode (11, 12) sur l'autre surface du séparateur supérieur, sur laquelle l'adhésif est appliqué, après l'application de l'adhésif par la troisième buse (213).

9. Procédé selon la revendication 8, dans lequel la première buse (211, 371), la deuxième buse (212, 372) et la troisième buse (213) appliquent le premier adhésif ou le deuxième adhésif (14, 34) sous forme d'une pluralité de points.

10. Procédé selon la revendication 1, dans lequel :
le procédé de fabrication de la batterie rechargeable consiste en outre à fabriquer une unité radicalaire (10), dans lequel l'unité radicalaire (10) est une unité sur laquelle l'électrode (11, 12) et le séparateur (13) sont empilés, le séparateur (13) étant replié pour couvrir l'électrode (11, 12),
dans lequel l'ensemble électrode (1) est fabriqué en formant de manière répétée l'unité radicalaire (10).

11. Procédé selon la revendication 10, dans lequel l'étape de fabrication de l'unité radicalaire (10) consiste à :
dérouler une feuille d'électrode (3111, 3121) d'une bobine d'électrode (11, 12) pour former une pluralité d'électrodes (11, 12) à partir de la feuille d'électrode (3111, 3121) ;
dérouler le séparateur (13) à empiler avec l'électrode (11, 12), d'une bobine de séparateur (110, 121, 321) ;
positionner le séparateur (13) sur une surface supérieure d'une table (36) ; et
appliquer le premier adhésif ou le deuxième adhésif (14, 34) sur au moins une partie du séparateur (13) qui est positionnée sur la table (36) et l'électrode (11, 12), par une buse (21, 37),
dans lequel l'électrode (11, 12) comprend une première électrode (11, 12) et une deuxième électrode (11, 12).

12. Procédé selon la revendication 11, comprenant en outre une étape de pliage après l'étape d'application de l'adhésif,
dans lequel dans l'étape de pliage,
quand la première électrode (11, 12) est positionnée sur le séparateur (13), un côté du séparateur (13) est replié pour couvrir la première électrode (11, 12), et
quand la deuxième électrode (11, 12) est positionnée sur le séparateur (13), l'autre côté du séparateur (13) est replié pour couvrir la deuxième électrode (11, 12).

13. Procédé selon la revendication 11, dans lequel :
la buse (21, 37) applique le premier adhésif ou le deuxième adhésif (14, 34) sous forme d'une pluralité de points.

14. Batterie rechargeable comprenant :
un ensemble électrode (1-4) dans lequel une électrode (11, 12) et un séparateur (13) sont empilés en alternance ; et
un boîtier de poche (70) pour recevoir l'ensemble électrode (1-4) avec la solution d'électrolyte,
dans lequel une marque, sur laquelle une partie de premier adhésif (14, 34) a été appliquée, reste sur une partie centrale du séparateur (13), qui est en contact avec l'électrode (11, 12), et une partie de deuxième adhésif (14, 34) reste aux deux extrémités du séparateur (13) adjacentes à des languettes de l'électrode (11, 12), et
la marque, sur laquelle le premier adhésif (14, 34) a été appliqué, est une marque dans laquelle le premier adhésif (14, 34) ayant été formé entre l'électrode (11, 12) et le séparateur (13) a été dissoute dans la solution d'électrolyte, et le deuxième adhésif (14, 34) comprend un composant adhésif qui n'est pas dissous dans la solution d'électrolyte.

15. Batterie rechargeable selon la revendication 14, dans laquelle :
le premier adhésif (14, 34) est formé en appliquant l'adhésif sous forme d'une pluralité de points, et
la marque, sur laquelle le premier adhésif (14, 34) a été appliqué, est formée sous forme de points à une position où le premier adhésif (14, 34) est formé.

16. Batterie rechargeable selon la revendication 15, dans laquelle :
le premier adhésif (14, 34) est un adhésif à base d'acrylate (14, 34), et
la solution d'électrolyte est un solvant organique.

17. Batterie rechargeable selon la revendication 14, dans laquelle :
l'électrode (11, 12) comprend une première électrode (11, 12) et une deuxième électrode (11, 12),
le séparateur (13) comprend un séparateur supérieur et un séparateur inférieur (13), et
l'ensemble électrode (1) a une structure dans lequel le séparateur inférieur (13), la première électrode (11, 12), le séparateur supérieur, et la deuxième électrode (11, 12) sont empilés en alternance.

18. Batterie rechargeable selon la revendication 14, dans laquelle :
l'électrode (11, 12) comprend une première électrode (11, 12) et une deuxième électrode (11, 12), et
l'ensemble électrode (1-4) est configuré de sorte que :
la première électrode (11, 12) est positionnée sur le séparateur (13), et un côté du séparateur (13) est replié pour couvrir la première électrode (11, 12), et
la deuxième électrode (11, 12) est positionnée sur le séparateur (13), et l'autre côté du séparateur (13) est replié pour couvrir la deuxième électrode (11, 12).

19. Batterie rechargeable selon la revendication 17 ou 18, dans laquelle :
le deuxième adhésif (14, 34) est formé en appliquant l'adhésif sous forme d'une pluralité de points.
